(19) Europäisches Patentamt

European Patent Office

Office européen des brevets

(11) **EP 1 294 124 A2**

(12) **EUROPEAN PATENT APPLICATION**

(43) Date of publication:
**19.03.2003 Bulletin 2003/12**

(51) Int Cl.7: **H04L 9/06**

(21) Application number: **02292203.3**

(22) Date of filing: **09.09.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **17.09.2001 IT MI20011938**

(71) Applicant: **ALCATEL**
**75008 Paris (FR)**

(72) Inventors:
• **Cucchi, Silvio**
**20083 Gaggiano (Milano) (IT)**
• **Constantini, Carlo**
**22064 Casatenovo (Lecco) (IT)**

(74) Representative: **Lamoureux, Bernard et al**
**Intellectual Property Department,**
**Vimercate**
**Via Trento, 30**
**20059 Vimercate (IT)**

(54) **Method for data stream encryption**

(57) Method for performing encryption of a data stream, the method comprising the steps of using encoding means (11, 21) to apply a mapping operation (T, T4) to the incoming data (FI), to apply a reversal operation (I, Is), to apply a key combination operation (k; k4), to apply a demapping operation (T$^{-1}$; T4$^{-1}$), and comprising the steps of taking and the re-combining the outgoing data (FO) with the incoming data (FI). According to the present invention, it is possible to apply the mapping operation (T4) upwards of the re-combination operation between the incoming data stream (FI) and the outgoing data stream (FO), to apply the demapping operation (T4$^{-1}$) downwards of the data stream taking operation (FO) and to implement a simplified reversal operation (Is).

Fig. 2

EP 1 294 124 A2

**Description**

The present invention relates to a method for performing encryption of a data stream, the method employing encoding means to perform a mapping operation to the incoming data, to apply a reversal operation, to perform a combination key operation, to perform a demapping operation, and further comprising the steps of tacking and re-combining the outgoing data with the incoming data.

A method for encrypting data streams is known in the literature, the method comprising the step of coding data blocks according to the so-called 'RIJNDAEL' Standard. The block coding comprises the application of a cryptographic key and a data block algorithm, for instance 64 contiguous bits, only once rather than a bit each time. In order to avoid that identical data blocks be encrypted in the same manner, it is known for instance to apply the previous coded block to the subsequent block in the sequence of incoming data.

Said RIJNDAEL Standard is based upon the adoption of three layers, wherein a linear mixing function of blocks, a non-linear function and a key addition function are performed.

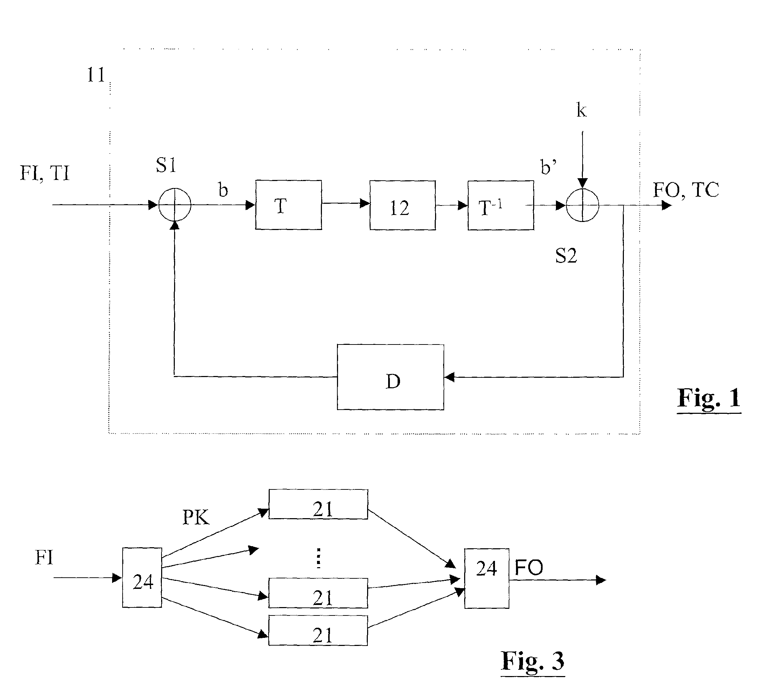

Said encryption and encoding operations can be exemplified through the block diagram according to Figure 1.

In said Figure 1 an incoming data stream FI, containing a word of cleartext TI is input into an encoding circuit 11, which comprises a linear transformation block T, followed by an encoder block 12, in turn followed by a reversal linear transformation block $T^{-1}$. At the output of the reversal linear transformation block $T^{-1}$, through an adder S2, a k key is inserted, therefore, an outgoing data stream FO is produced, which contains an encoded text TC. Said encoded text TC is fed-back through a D delay block to be combined with the following incoming data stream block FI through an adder S1. Therefore, the coding circuit 11 comprises an encoding ring and is of non-linear type. The encoder incoming bytes 11 are indicated by b and the outgoing bytes are indicated by b'.

A similar structure, as all the symmetric encryption systems, shows at least two disadvantages. Firstly, the elaboration of the incoming data stream FI is complex.

In fact, the RIJNDAEL coding diagram comprises the step of loading the incoming data stream FI on a variable string of 128 (or 192, or 256) bytes and to fundamentally repeat, on a regular basis, the following operations on the variable string:

ByteSub; ShiftRows; MixColumn; AddRoundKey.

- the ShiftRows operation is simply a permutation among the 128 bits;
- the MixColumn operation is a linear operation, represented - therefore - as a matrix application;

- the AddRoundKey operation is a module 2 adding operation, (in other words, Xor bit ) between the 128 bits of k key and the 128 bits of the variable at the S2 adder input;
- the ByteSub operation, on the contrary, is a non-linear operation applied to each byte of the variable in order to implement the so-called mapping, namely a transformation on the bytes b and involving the T, 12 e $T^{-1}$ blocks.

Said Bytesub operation is a complex operation, namely its implementation employs a great number of logical ports and a remarkable number of layers, therefore resulting in a large latency time, from which a low operating speed is resulting.

According to the RIJNDAEL Standard, the Bytesub operation consists in transforming a byte according to the relationship:

$$b'=M \cdot I(b)+c$$

wherein $I(b)$ is the reversal element of $b$ in the Galois field, $M$ is a 8x8 matrix and $c$ is a constant vector.

In the art, an indirect method to implement more effectively the reversal of an element in the field of Galois is known. Said method consists in applying a linear transformation $T$ to the element $b$, as the one indicated in the block at Fig. 1, therefore a simplified reversal $Is$, which is simpler than the previous one, and then the reversal linear transformation $T^{-1}$, namely:

$$I(b) = T^{-1}Is(T \cdot b)$$

From which:

$$b'=MT^{-1}Is(T \cdot b)+c$$

This re-definition, which, as previously said, is known, allows to have a simpler circuit, which brings only two linear transformations and a simple reversal.

It is to be noticed that $(MT^{-1})$ is a pre-calculated 8x8 constant matrix.

The only remaining problem lyes in that the above said Bytesub operation has to be re-calculated for each iteration. For this reason, there is a remarkable computation complexity and a corresponding complexity of components involved to implement said computation.

Furthermore, as the block encryption is depending on the encription of the previous block through the D delay block, it is necessary to consider the presence and the relevance of the latency times, namely the times wherein the previous block is not available at the adder S1 to be combined. In particular, this clearly appears in the Cipher Block Chaining modes, wherein the enciphered text TC of the outgoing data stream FO is combined through an EXOR function with the word of clear text TI of the incoming data stream FI.

The object of the present invention is overcoming the above said disadvantages and providing a method for performing data stream encryption having an improved implementation, and which is more efficient vis-à-vis the known solutions.

In this domain, the main object of the present invention is indicating an encryption method of data stream for accelerating the encryption operation.

A further object of the present invention is to indicate an encryption method of data stream allowing the use of computational components which require a reduced complexity and performances.

The above objects are achieved by an encryption method of data stream and/or enciphering circuit incorporating the characteristics of the appended Claims, which are an integral part of the present description.

The invention will certainly become clear in view of the following detailed description, given by way of a mere non limiting and exemplifying example, to be read with reference to the attached figures, wherein:

- Fig. 1 illustrates a block diagram showing the principle of an encoder implementing the data stream encryption method according to the prior art;
- Fig. 2 illustrates an encoder implementing the data stream encryption method according to the present invention;
- Figure 3 illustrates a block diagram showing a system of encoders implementing the encryption method of a data stream according to the present invention;
- Figure 4 illustrates a basic diagram of a detail of the encoders system according to Figure 3.

According to the present invention, it is suggested to apply the transformation $T$ at the input of the encoding ring and to apply the reversal transformation $T^{-1}$ at the output, thus simplifying the expression, or round, which is iterated through the encoding ring.

In other words, the encoding ring, referring to what indicated in Fig. 1, operates since the beginning on the transformed domain T b, so that:

$$Tb' = T \cdot M \cdot T^{-1} Is(T \cdot b) + Tc$$

It is to be noticed that $T \cdot M \cdot T^{-1}$ is a pre-calculated 8x8 constant matrix.

The Bytesub operation now consists in a linear transformation and a simple reversal on bytes b.

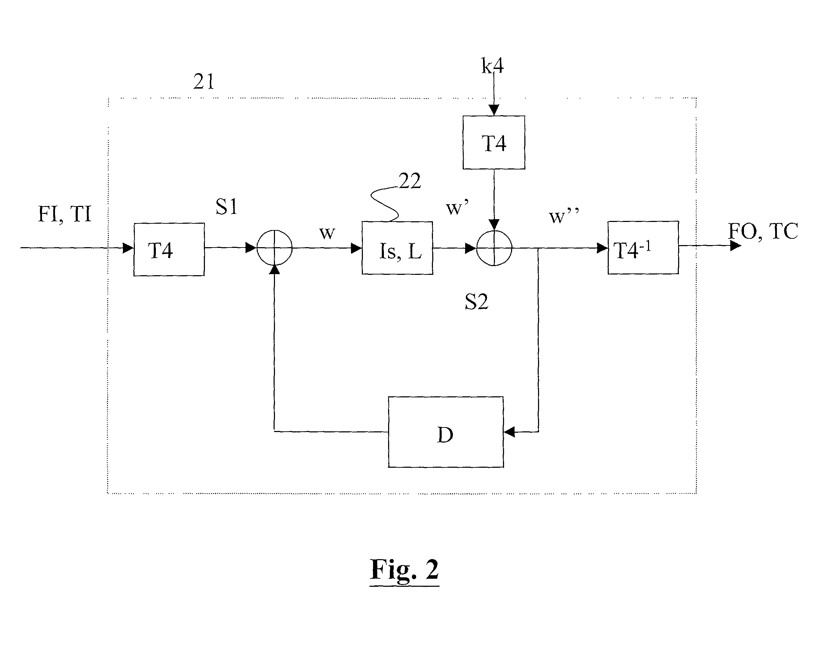

Figure 2 exemplifies a block diagram concerning an encoding circuit 21 according to the present invention, wherein the incoming data stream FI first enters a linear transformation block T4, so that the b bytes, which have became transformed bytes w, pass through the S1 adder and into a simplified encoder block 22 which applies the simplified Is reversal and a MixColumn L operation, in order to generate outgoing transformed bytes w'.

It is to be observed that, while describing Figure 1, we have spoken about operations on 8-bit bytes, b, b' and c being vectors of 8 bits, while T and M being 8x8 binary matrices.

On the contrary, the coding circuit 21 described as an example in Fig. 2, operates on the blocks of 32 bits. w and w' are to be understood therefore as the chaining of 4 bytes, T4 and M4 are block diagonal matrices 32x32, wherein

$$T4 = \begin{bmatrix} T & 0 & 0 & 0 \\ 0 & T & 0 & 0 \\ 0 & 0 & T & 0 \\ 0 & 0 & 0 & T \end{bmatrix}$$

while

$$M4 = \begin{bmatrix} M & 0 & 0 & 0 \\ 0 & M & 0 & 0 \\ 0 & 0 & M & 0 \\ 0 & 0 & 0 & M \end{bmatrix}$$

and

$$C4 = \begin{bmatrix} c \\ c \\ c \\ c \end{bmatrix}$$

Is4 is the simplified reversal operation in the transformed domain operating on 4 bytes independently.

Then, 4 ByteSub operations could be represented as:

$$T4w' = T4 \cdot M4 \cdot T4^{-1} Is4(T4w) + T4c4$$

As previously made, we neglect the ShiftRows operation (it is just a permutation).

As the MixColumn operation is a linear operation applied into the encoding block 22, namely a matrix L 32x32, and being the AddRoundKey operation the sum of 32 bits of a k4 key through the S2 adder, the output of the encoding ring, which shall re-enter for the next iteration as transformed bytes w through the D delay element and the S1 adder, is

$$T4w'' = T4(L(M4 \cdot T4^{-1} ls4(T4 \cdot w) + c4) + k4) =$$

$$= T4 \cdot L \cdot M4 \cdot T4^{-1} \cdot ls4(T4w) + T4 \cdot L \cdot c4 + T4 \cdot k4$$

It is to be noticed that $T4 \cdot L \cdot M4 \cdot T4^{-1}$ is a constant matrix (therefore pre-calculated), $T4 \cdot L \cdot c4$ is a constant vector and $T4 \cdot k4$ are 32 bits of transformed key, through a block T4 properly placed before the S2 adder.

The iteration, when so written, is not directly employing the key k4, but the key in the transformed domain, $T4 \cdot k4$.

Since the key expansion process (KeyExpander process) employs the ByteSub operation, and therefore the reversal, advantageously the KeyExpander is implemented in the transformed domain, so the KeyExpander is simpler and generates directly $k4 \cdot T4$.

In brief, the encoder block operation 22 consists now in four simplified reversals and a a multiplication of the matrix and vector, followed by the sum of the key k4, while in the known state of art four reversals (not simplified), a multiplication of the matrix and vector and the sum of the key were performed.

Substantially, the mapping (and demapping) operation 4 has been carried outside of the encoder block 22.

Besides, if the circuit is considered under the CBC modalities, it is evident that the mapping operation, being of linear type, is moved outside of the encoding ring, therefore outside of the area with a latency constraint.

According to a further characteristic of the present invention, the encoding circuits 21 operate jointly to the schedulers blocks 24, which distribute the computational load on the encoding blocks 22.

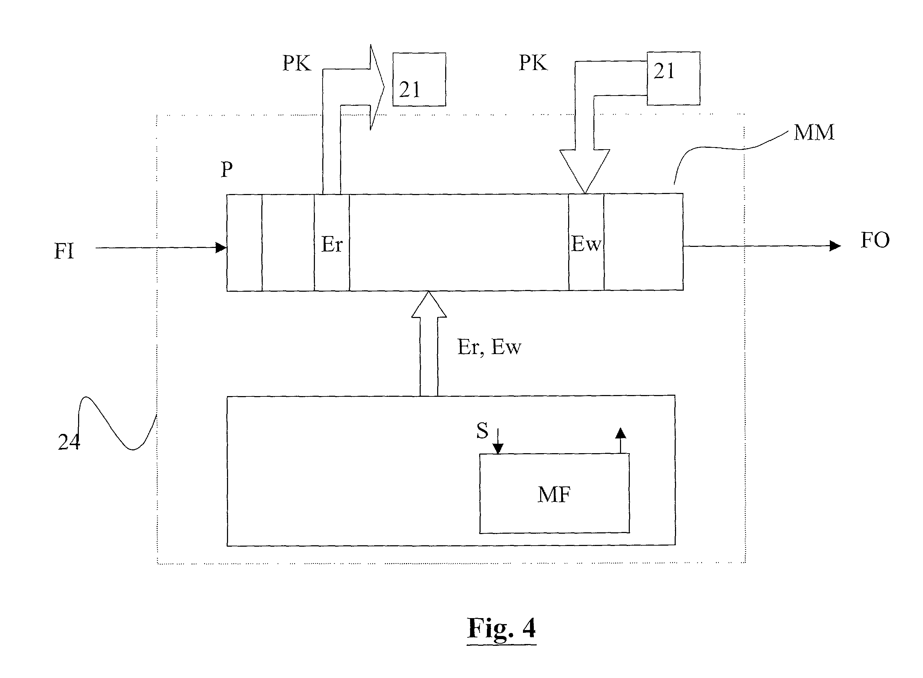

Figure 3 describes, therefore, a parallel structure encoding system.

The CBC modality, in fact, limits the max. elaboration capacity of a coded circuit, as the encoder circuit 11 or 21.

The parallel structure according to Figure 3 forecasts therefore a plurality of encoders blocks 22, for instance 8, which are slow, namely they operate at a rate which is an eighth of the incoming data stream rate FI, but they contribute, by a parallel operation, to reach the desired rate.

An encoder under CBC modalities is not parallelizable *per se*; but in the case of the packets traffic encoding, the elaboration of a single data packet is awarded to each encoder 22.

For this purpose, the proper schedulers blocks 24 are inserted, which are placed upwards of the plurality of encoders blocks 22 and distribute their PK packets, of which the incoming data stream FI is composed. The same schedulers blocks 24 recombine the PK packets at the output of the coded circuits 22 and generate the outgoing data stream FO.

The scheduler 24 is exemplified in Fig. 4 and comprises substantially a MM memory having a length LM, wherein it is possible to have an access four times each clock cycle, twice for writing operations and twice for reading operations.

Now, the writing and reading operations will be detailed:

- writing operation at the P location of the (clear) word of the incoming data stream FI;
- reading operation from the location P of the word addressed to the output.

At each clock cycle, the location P pointer is incremented as per the relationship:

$$P = (P+1) \bmod LM$$

Up to now, we have seen the description of the operation of the memory MM as a simple delay line (with delay = LM x clock period of time)

The further two reading and writing accesses, on the contrary, are used for the elaboration; specifically, a reading operation is implemented at a location identified by an Er address, which contains a word to be elaborated (or a clear word), and a writing operation is implemented at another location identified by an Ew address, by writing the elaborated (or encrypted data). Therefore, if each word which has been written in the memory MM is then read, codified and rewritten, the second reading operation returns the coded data stream in the same order of writing.

In other words, in each clock period of time, the received word is written into the memory, a clear word is read from the memory, an encrypted word is written (in the same location wherein the corresponding clear word was resident) and the coded word to be transmitted is read.

The physical implementation of a four-access memory can be carried out by employing a single-access memory with a data bus which is quadruple of the input word and the four-cycle accesses are set.

Or, in case of a two-access memory, it is sufficient to double the data bus width.

Now, we consider a control machine 25 which generates the Ew and Er addresses, also represented in Fig 4.

It is supposed that the encoders 22 be N, with N=8 for instance, and that they have an elaboration rate of 1/N vis-à-vis the rate of the FI incoming data stream.

The Ew and Er addresses select the data in turn for one of the encoders 22, and are evolved in the time t according to the following relationships:

Er[t] = (Er[t-N] + 1) mod LM    if Er[t-N] is not the last word of a packet PK
Er[t]= S    if Er[t-N] is the last word of a packet PK
Ew[t] = Er[t-N]

where S is the starting address of a packet PK which is resident in the memory MM.

The dynamics of the starting address S is regulated by the mechanism which distributes the work among the N slow encoders blocks 22: when the first word arrives at the input of a new packet PK, the S address - where the first word of the packet PK has been written - and the length of the same packet PK are queued, namely they are inserted into a FIFO MF or queue memory. Then, the S address is picked off from the queue, when the encoder block 22 has terminated, that is when the reading address Er[t-N] reaches the last word of the PK packet.

The sufficient conditions for the running of scheduler 24 without overflow risks are:

LM length of memory MM
LM > 2 N * lmax
LF number of FIFO MF memory locations
LF > 2*N lmax/lmin

Where lmax and lmin are respectively the max. and min. lengths of a packet PK expressed in a number of words.

From the above description, the characteristics of the present invention are therefore clear, as clear are its advantages.

The encryption method of a data stream according to the present invention allows advantageously to reduce the complexity of encoders, by reducing the operations on the blocks and by carrying the mapping operations outside of the encoding rings. Besides, advantageously, the encryption method of a data stream according to the present invention allows to simplify also the keys generation.

Too, advantageously, the encryption method of a data stream according to the present invention allows to encode at high rate, also under the CBC manner, even with slower encoders and therefore of simpler but less expensive type, thanks to the development of a parallel architecture.

It is evident that several changes are possible to the manskilled in the art to the encryption method of a data stream as above said for example, without outgoing from the scope of the invention, as it is clear that in the practical embodiment the forms of the illustrated details can be different and the same can be replaced by technically equivalent elements.

**Claims**

1. Method for performing encryption of a data stream, the method comprising using encoding means (11, 21) to apply a mapping operation (T, T4) to the input data (FI), to apply a reversal operation (I, Is), to apply a combination operation by a key (k; k4), to apply a demapping operation (T-1; T4-1), and further comprising tacking and re-combining outgoing data (FO) with the incoming data (FI), **characterized in that** the mapping operation (T4) is applied upwards the re-combination operation between the incoming data stream (FI) and the outgoing data stream (FO), to apply the demapping operation (T4-1) downwards of the tacking operation of the outgoing data stream (FO) and to implement the simplified reversal operation (Is).

2. Encryption method of a data stream according to Claim 1, **characterized by** inserting a mapping operation (T4) into the combination key operation (k4) in order to produce a mapped key (T4 k4)

3. Encryption method of a data stream according to Claim 2 **characterized by** distributing the incoming data stream (FI) in a plurality (N) of parallel data streams (PK) addressed to a plurality of encoding circuits (22) and parallel encrypting each one of said data streams (PK).

4. Encryption method of a data stream according to Claim 3 **characterized by** distributing packets (PK) of the incoming data stream (FI) to the plurality of encoding circuits (21) according to a time sequence ascertained by proper scheduling means (24) and re-combining the encrypted packets coming from each coding circuit (21) into an outgoing data stream (FO).

5. Encryption method of a data stream according to the Claim 4 **characterized in that** said scheduling means (24) carry out the distribution and the combination of packets (PK) through writing and reading operations into a multiple access memory (MM).

6. Encryption method of a data stream according to Claim 5 **characterized in that** said reading and writing operations are generated through a control machine (25) which generates proper writing (Ew) and reading (Er) addresses into the multiple access memory (MM) for distributing the packets (PK) to a plurality of encoders (21).

7. Encoder of the type comprising mapping and demapping means (T, T$^{-1}$; T4, T4$^{-1}$), encoding means (22) fit for implementing reversal operations and means (S1) for inserting a key (k, k4), and means for implementing a coding ring (D, S2), **character-**

**ised in that** said mapping and demapping means (T, T$^{-1}$; T4, T4$^{-1}$) are placed upwards and downwards of said encoding ring (D, S2).

8. Encoder according to Claim 7, **characterized in that** said means (S1) inserting a key are connected to further mapping means (T4) to transform the key (k4).

9. System for encrypting data, comprising a plurality of encoding devices according to Claim 7, **characterized in that** it comprises scheduling means (24) for distributing data packets (PK) from an incoming data stream (FI) to said plurality of encoding devices (21) and for re-combining the elaborated packets into an outgoing data stream (FO).

10. System for encrypting data according to Claim 9, **characterized in that** said scheduling means (24) comprise a multiple access memory (MM).

11. System for encrypting data according to Claim 10, **characterized in that** said scheduling means (24) comprise a control machine (25) generating proper writing (Ew) and reading ( Er) addresses in the multiple access memory (MM) for distributing packets (PK) to a plurality of encoding devices (21).

EP 1 294 124 A2

11

FI, TI    S1    b    T    →    12    →    T⁻¹    b'    k    FO, TC

S2

D

**Fig. 1**

FI    24    PK    21    ⋮    21    21    24    FO

**Fig. 3**

Fig. 2

**Fig. 4**

EP 1 294 124 A2